# EUROPÄISCHE PATENTSCHRIFT

(11) **EP 2 635 790 B1**
(45) Veröffentlichungstag und Bekanntmachung des Hinweises auf die Patenterteilung: **28.01.2015**
(21) Anmeldenummer: 11784589.1
(22) Anmeldetag: 18.10.2011
(51) Int. Cl.: F01N 3/08, F01N 3/10, F01N 3/035, F02B 37/013, F02B 37/12, F02B 37/18, F01N 3/20, F02M 25/07, F02B 37/00

(54) **KRAFTFAHRZEUG-BRENNKRAFTMASCHINE MIT ABGASRÜCKFÜHRUNG**
MOTOR-VEHICLE INTERNAL COMBUSTION ENGINE WITH EXHAUST-GAS RECIRCULATION
MOTEUR À COMBUSTION INTERNE DE VÉHICULE AUTOMOBILE ÉQUIPÉ D'UNE RECIRCULATION DE GAZ D'ÉCHAPPEMENT

(30) Priorität: 04.11.2010 DE 102010050413
(43) Veröffentlichungstag der Anmeldung: 11.09.2013
(73) Patentinhaber: Daimler AG, 70327 Stuttgart (DE)
(72) Erfinder: KEPPELER, Berthold, 73277 Owen (DE)
(74) Vertreter: JENSEN & SON
(86) Internationale Anmeldenummer: PCT/EP2011/005244
(87) Internationale Veröffentlichungsnummer: WO 2012/059180

(56) Entgegenhaltungen:
- WO-A1-2008/030314
- DE-A1-102009 014 361

## Beschreibung

Die Erfindung betrifft eine Kraftfahrzeug-Brennkraftmaschine gemäß dem Oberbegriff des Anspruchs 1.

In der WO 2008/103230 A1 ist eine Brennkraftmaschine mit Abgasrückführung beschrieben, in deren Abgastrakt ein Partikelfilter und ein vorgeschalteter SCR-Katalysator angeordnet sind. Mittels einer Zugabevorrichtung kann Ammoniak oder Harnstoff als Stickoxid-Reduktionsmittel stromauf vom SCR-Katalysator in den Abgastrakt gegeben werden. Die Abgasrückführung erfolgt dabei über einen stromab des Partikelfilters vom Abgastrakt abzweigenden Niederdruckpfad.

In der WO 2008/030314 A1 sowie in der DE 10 2009 014 361 A1 beschriebene ähnliche Brennkraftmaschinen verfügen zudem über eine Abgasrückführung über einen Hochdruckpfad. Bei der WO 2008/030314 A1 ist ein weiterer, stromab vom Partikelfilter angeordneter SCR-Katalysator vorgesehen.

Bei einer Abgasrückführung über einen Niederdruckpfad kann es jedoch durch im rückgeführten Abgas beispielsweise enthaltene stickoxid- oder schwefelbasierte Verbindungen zu einer Verunreinigung eines im Niederdruckpfad angeordneten Abgaskühlers kommen.

Aufgabe der Erfindung ist es, eine Kraftfahrzeug-Brennkraftmaschine anzugeben, welche eine gute Abgasreinigung mit einer möglichst gering verunreinigten Abgasrückführung ermöglicht.

Diese Aufgabe wird durch eine Brennkraftmaschine mit den Merkmalen des Anspruchs 1 gelöst.

Die erfindungsgemäße Kraftfahrzeug-Brennkraftmaschine weist ein Luftzufuhrsystem zur Zufuhr von Verbrennungsluft zur Brennkraftmaschine und einen Abgase der Brennkraftmaschine aufnehmenden Abgastrakt auf, in welchem ein Partikelfilter und eine zur selektiven katalytischen Stickoxidreduktion mittels Ammoniak befähigte SCR-Abgasreinigungskomponente angeordnet sind. Dabei ist für die erfindungsgemäße Brennkraftmaschine eine Zugabevorrichtung zur Zugabe von Ammoniak oder eines zur Abspaltung von Ammoniak befähigten Reduktionsmittels stromauf der SCR-Abgasreinigungskomponente vorgesehen. Weiterhin ist ein insbesondere erster Abgasturbolader vorgesehen, dessen Turbine stromauf vom Partikelfilter im Abgastrakt ange-ordnet ist. Zur Rückführung von Abgas aus dem Abgastrakt in das Luftzufuhrsystem ist eine stromauf der Turbine des insbesondere ersten Abgasturboladers vom Abgastrakt abzweigende erste Abgasrückführleitung und eine stromab vom Partikelfilter vom Abgastrakt abzweigende zweite Abgasrückführleitung vorgesehen. Charakteristischerweise ist in der zweiten Abgasrückführleitung ein SCR-Katalysator angeordnet.

Die erste, stromauf der Abgasturboladerturbine abzweigende Abgasrückführleitung stellt einen Hochdruck-Abgasrückführpfad dar, über welchen ein Hochdruckanteil von rückgeführtem Abgas aus dem Abgastrakt in das Luftzufuhrsystem geleitet werden kann. Demgegenüber stellt die zweite, stromab des Partikelfilters vom Abgastrakt abzweigende Abgasrückführleitung einen Niederdruck-Abgasrückführpfad dar, über welchen ein Niederdruckanteil von rückgeführtem Abgas in das Luftzufuhrsystem geleitet werden kann.

Mittels des in der zweiten Abgasrückführleitung angeordneten SCR-Katalysators ist eine Verbesserung des Stickoxidumsatzes ermöglicht. Der SCR-Katalysator in der zweiten Abgasrückführleitung ermöglicht eine Entlastung der SCR-Abgasreinigungskomponente im Abgastrakt und vermindert sowohl den Stickoxid- als auch den Ammoniakgehalt des über den Niederdruckpfad rückgeführten Abgases. Dadurch werden Verunreinigungen, beispielsweise durch Ablagerung von Ammonium- oder Stickoxid-Verbindungen in der zweiten Abgasrückführleitung vermieden und die Rohemission der Brennkraftmaschine ist verbessert. Infolge der resultierenden stickoxidarmen Abgasrückführung ist die Kraftstoffverbrennung in der Brennkraftmaschine verbessert. Der SCR-Katalysator in der zweiten Abgasrückführleitung ermöglicht auch ein Abfangen von zumindest vergleichsweise großen Partikeln, wodurch ein separater Grobpartikelfilter in der zweiten Abgasrückführleitung entfallen kann. Zudem bewirkt der SCR-Katalysator eine Strömungsvergleichmäßigung, wodurch Druckverluste über die zweite Abgasrückführleitung verringert werden. Der SCR-Katalysator in der zweiten Abgasrückführleitung sowie die SCR-Abgasreinigungskomponente im Abgastrakt umfassen dabei ein katalytisch wirksames Material in Bezug auf eine selektive Reduktion von Stickoxiden unter oxidierenden Bedingungen mittels Ammoniak. Der SCR-Katalysator in der zweiten Abgasrückführleitung ist vorzugsweise als geträgerter Wabenkörper mit einer SCR-Katalysatormaterialbeschichtung oder als Vollextrudat-Wabenkörper, beispielsweise auf der Basis von Vanadiumpentoxid/Titanoxid/Wolframoxid ausgebildet. Die SCR-Katalysatormaterialbeschichtung kann auch auf einer zur Ausfilterung von Partikel geeigneten Partikelfilterstruktur aufgebracht sein. Besonders bevorzugt ist ein Wabenkörpermonolith mit einer Kupfer oder Eisen enthaltenden Zeolith-Beschichtung.

In Ausgestaltung der Erfindung ist die im Abgastrakt angeordnete SCR-Abgasreinigungskomponente als katalytische Beschichtung des Partikelfilters und/oder als ein stromauf und/oder stromab des Partikelfilters im Abgastrakt angeordnetes separates SCR-Katalysatorbauteil ausgebildet. Bei einer Ausbildung als katalytische Beschichtung des Partikelfilters kann diese auf der Rohgasseite oder auf der Reingasseite des filterwirksamen Materials aufgebracht sein. Im Fall eines als wall-flow-Filter ausgebildeten Partikelfilters kann die Beschichtung auf der Oberfläche von einigen oder allen Gaseintrittskanälen oder auf der Oberfläche von einigen oder allen Gasaustrittskanälen aufgebracht sein. Dabei kann die Beschichtung auch lediglich abschnittsweise, bevorzugt auf einem stromaufwärtigen Abschnittsbereich des Partikelfilters vorgesehen sein. Vorzugsweise ist zusätzlich oder alternativ ein separates SCR-Katalysatorbauteil im Abgastrakt vorgesehen. Dieses ist bevorzugt stromab des Partikelfilters, insbesondere stromab der Abzweigestelle der zweiten Abgasrückführleitung im Abgastrakt vorgesehen. Es kann jedoch auch eine Anordnung unmittelbar eingangsseitig oder ausgangsseitig des Partikelfilters vorgesehen sein. Vorzugsweise ist vorgesehen, dass der größere Anteil der Stickoxidreduktion durch die SCR-Abgasreinigungskomponente und der kleiner Anteil durch den in der zweiten Abgasrückführleitung angeordneten SCR-Katalysator erfolgt.

In weiterer Ausgestaltung der Erfindung ist stromab von der Turbine des insbesondere ersten Abgasturboladers und stromauf des Partikelfilters ein Oxidationskatalysator im Abgastrakt angeordnet. Der Oxidationskatalysator ermöglicht eine oxidative Entfernung von Restkohlenwasserstoffen im Abgas. Weiterhin wird vom Oxidationskatalysator im Abgas enthaltenes Stickstoffmonoxid wenigstens teilweise zu Stickstoffdioxid oxidiert, welches seinerseits im Partikelfilter abgelagerten Ruß bei vergleichsweise niedrigen Temperaturen (300 °C bis 450 °C) durch Oxidation entfernen kann. Weiterhin ermöglicht eine erhöhte Konzentration von Stickstoffdioxid einen verbesserten Ablauf der katalytischen Stickoxidreduktion an der SCR-Abgasreinigungskomponente. Hierfür ist es vorzugsweise vorgesehen, durch geeignete Einstellung des Verhältnisses von über den Niederdruck-Abgasrückführpfad und über den Hochdruck-Abgasrückführpfad rückgeführter Abgasmenge einen Stickstoffdioxidanteil an den im Abgas enthaltenen Stickoxiden von wenigstens annähernd 50 % eingangsseitig der SCR-Abgasreinigungskomponente einzustellen. Außerdem ist eine bedarfsweise Anhebung der Abgastemperatur durch Oxidation von zusätzlich ins Abgas eingebrachten Kohlenwasserstoffen ermöglicht. Insbesondere kann für eine thermische Regeneration des Partikelfilters durch Rußabbrand das Abgas durch motorische Nacheinspritzung oder durch motorexterne Sekundäreinspritzung von Kraftstoff das Abgas mit Kohlenwasserstoffen angereichert werden.

In weiterer Ausgestaltung der Erfindung ist die Zugabe von Ammoniak oder des zur Abspaltung von Ammoniak befähigten Reduktionsmittels stromab des Oxidationskatalysators und stromauf des Partikelfilters vorgesehen. Dadurch wird einerseits eine Ammoniakoxidation vermieden, anderseits kann eine Hydrolyse von gegebenenfalls als Reduktionsmittel zugegebenem Harnstoff infolge des Durchlaufs durch den Partikelfilter verbessert werden.

In weiterer Ausgestaltung der Erfindung sind Einstellmittel zur Einstellung der rückgeführten Abgasmenge vorgesehen, welche ein einstellbares Drosselelement, angeordnet im Abgastrakt stromab der Abzweigestelle der zweiten Abgasrückführleitung und/oder in der zweiten Abgasrückführleitung vor deren Einmündestelle in das Luftzufuhrsystem, und/oder ein einstellbares Drosselelement, angeordnet in der ersten Abgasrückführleitung vor deren Einmündestelle in das Luftzufuhrsystem, umfassen. Dadurch ist praktisch über den gesamten Betriebsbereich der Brennkraftmaschine eine bedarfs- und betriebspunktabhängige Einstellung des Verhältnisses von Hochdruckabgasrückführrate und Niederdruckabgasrückführrate ebenso ermöglicht, wie eine variable Einstellung der Gesamtabgasrückführmenge. Sofern stromab der Abzweigestelle der zweiten Abgasrückführleitung ein SCR-Katalysator im Abgastrakt vorgesehen ist, ist das Drosselelement im Abgastrakt bevorzugt zwischen der Abzweigestelle und dem SCR-Katalysator angeordnet. Eine Anordnung stromab des SCR-Katalysators ist ebenfalls möglich.

Die Einstellmittel zur Einstellung des Niederdruckanteils bzw. des Hochdruckanteils von insgesamt rückgeführtem Abgas werden dabei insbesondere dazu genutzt, abhängig vom Betriebspunkt der Brennkraftmaschine einen für die katalytische Stickoxidverminderung der SCR-Abgasreinigungskomponente günstigen Anteil von Stickstoffdioxid (NO2) an den im Abgas vorhandenen Stickoxiden eingangsseitig der SCR-Abgasreinigungskomponente einzustellen. Dabei wird insbesondere eine Einstellung des Niederdruckanteils von rückgeführtem Abgas derart vorgenommen, dass ein Anteil von NO2 resultiert, welcher weniger als 70 % beträgt. Besonders bevorzugt ist eine Einstellung des Niederdruckanteils derart, dass der NO2-Anteil von im Abgas enthaltenem NO2 annähernd 50 % beträgt.

In weiterer Ausgestaltung der Erfindung ist ein zweiter Abgasturbolader vorgesehen, dessen Turbine stromab von der Turbine des ersten Abgasturboladers im Abgastrakt angeordnet ist. Dies ermöglicht eine zweistufige Aufladung der Brennkraftmaschine mit entsprechender Leistungssteigerung bei einem zugleich verringerten Ausstoß von Schadstoffen.

In weiterer Ausgestaltung der Erfindung ist im Luftzufuhrsystem ein umgehbarerer Ladeluftkühler zur Kühlung von verdichteter Verbrennungsluft angeordnet. Dies ermöglicht eine variable Absenkung der Verbrennungstemperatur von in den Brennräumen der Brennkraftmaschine verbranntem Kraftstoff und damit eine weitere Absenkung der Schadstoffemission der Brennkraftmaschine, insbesondere bezüglich der Stickoxide.

In weiterer Ausgestaltung der Erfindung ist in der ersten Abgasrückführleitung und/oder in der zweiten Abgasrückführleitung ein Abgaskühler zur Kühlung von zum Luftzufuhrsystem rückgeführtem Abgas angeordnet. Auch diese Maßnahme ermöglicht eine Absenkung der Verbrennungstemperaturen. Dabei ist es vorteilhaft, wenn in weiterer Ausgestaltung der Erfindung für den in der ersten Abgasrückführleitung und/oder für den in der zweiten Abgasrückführleitung angeordneten Abgaskühler eine Umgehungsleitung vorgesehen ist.

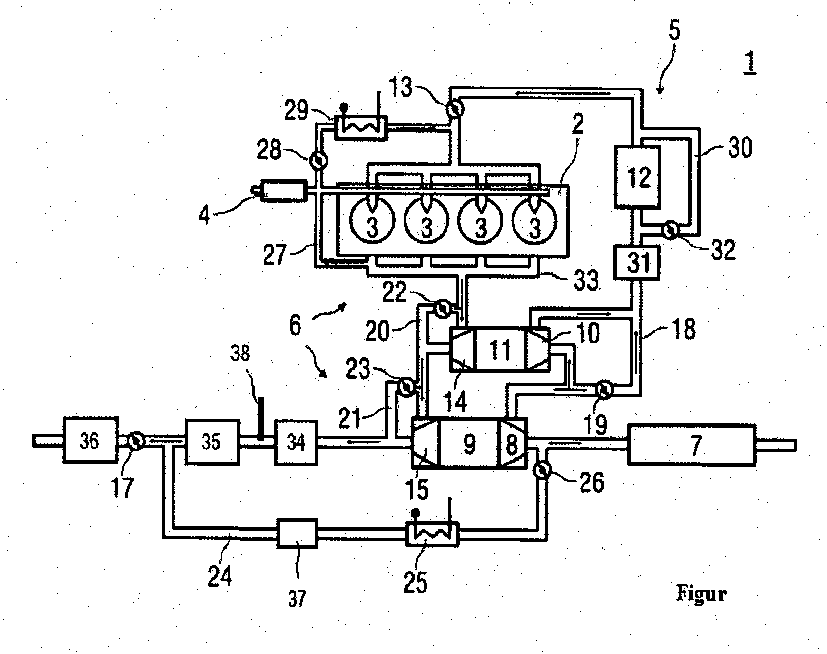

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in den Figurenbeschreibungen genannten und/oder in der Figur alleine gezeigten Merkmale und Merkmalskombinationen sind nicht nur in der jeweils angegeben Kombination sondern auch in anderen Kombinationen oder in der Alleinstellung verwendbar, ohne den Rahmen der Erfindung zu verlassen.

Dabei zeigt die einzige Figur eine schematische Darstellung einer vorteilhaften Ausführung einer erfindungsgemäßen luftverdichtenden Brennkraftmaschine 1 mit zweistufiger Abgasrückführung und vorliegend zweistufiger Aufladung.

Die Brennkraftmaschine 1 umfasst einen Motorblock 2 mit Arbeitszylindern 3 mit nicht näher gekennzeichneten Brennräumen, wobei den Arbeitszylindern 3 bzw. deren jeweiligem Brennraum mittels einer Hochdruckpumpe 4 Kraftstoff zuführbar ist. Ein Luftzufuhrsytem 5 führt den Arbeitszylindern 3 bzw. deren jeweiligem Brennraum Verbrennungsluft zu und ein Abgastrakt 6 führt Abgas aus den Arbeitszylindern 3 ab. Im Luftzufuhrsystem 5 sind ein Luftfilter 7, ein erster Verdichter 10 eines als Hochdruck-Abgasturbolader 11 ausgebildeten ersten Abgasturboladers, ein zweiter Verdichter 8 eines als Niederdruck-Abgasturbolader 9 ausgebildeten zweiten Abgasturboladers, ein Ladeluftkühler 12 und eine Drosselklappe 13 angeordnet.

Im Abgastrakt 6 sind ausgehend vom Motorblock 2 in Strömungsrichtung des Abgases eine dem Hochdruck-Abgasturbolader 11 zugeordnete erste Turbine 14, eine dem Niederdruck-Abgasturbolader 9 zugeordnete zweite Turbine 15, ein Oxidationskatalysator 34, ein Partikelfilter 35 eine Abgasaufstauklappe 17 sowie ein SCR-Katalysatorbauteil 36 angeordnet. Der Oxidationskatalysator 34 kann auch entfallen.

Der Partikelfilter 35 kann in Sintermetallausführung oder als wanddurchströmte Filtereinheit in Wabenkörperbauweise ausgebildet sein. Vorzugsweise ist für den Partikelfilter 35 eine katalytische Beschichtung vorgesehen. Insbesondere bei Entfall des Oxidationskatalysators 34 ist umfasst die katalytische Beschichtung des Partikelfilters 35 ein oxidationskatalytisch wirksames Material.

In einer besonders bevorzugten Ausführungsform ist dem Partikelfilter 35 eine SCR-Abgasreinigungskomponente zugeordnet. Diese kann als separates Bauteil unmittelbar vor oder unmittelbar hinter dem Partikelfilter 35 im Abgastrakt 6 angeordnet sein oder in den Partikelfilter 35 integriert sein, was nicht gesondert dargestellt ist. In diesem Fall kann das SCR-Katalysatorbauteil 36 auch entfallen. Ist, wie dargestellt, ein Oxidationskatalysator 34 stromauf des Partikelfilters 34 angeordnet, so ist es bevorzugt, wenn die dem Partikelfilter 35 zugeordnete SCR-Abgasreinigungskomponente als katalytische Beschichtung des Partikelfilters 35 ausgebildet ist. Diese Beschichtung kann auf der Gaseintrittsseite oder auf der Gasaustrittseite des entsprechenden filterwirksamen Materials aufgebracht sein. Bei der bevorzugten Ausführung des Partikelfilters 35 als üblicher wanddurchströmter Filter in Wabenkörperbauweise ist die Beschichtung mit dem entsprechenden SCR-Katalysatormaterial bevorzugt auf den rohgasexponierten Kanalwänden vorgesehen. Insbesondere in diesem Fall kann es vorteilhaft sein, die SCR-Abgasreinigungskomponente lediglich abschnittsweise als Beschichtung vorzusehen. Beispielsweise kann über einen ersten Teil der axialen Ausdehnung des Partikelfilters 35 von etwa 50 % der Länge eine Beschichtung mit einem SCR-Katalysatormaterial vorgesehen sein. Der in axialer Richtung gesehen hintere Teil ist dabei bevorzugt mit einer oxidationskatalytisch wirksamen Beschichtung versehen.

Zur Versorgung der im Abgastrakt 6 angeordneten SCR-Abgasreinigungskomponete, sei es in der Ausführung einer Beschichtung des Partikelfilters 35 oder als separates Katalysatorbauteil 36, ist eine Zufuhr für ein die selektive Stickoxidreduktion förderndes Reduktionsmittel zum Abgas vorgesehen. Hierfür ist stromauf der SCR-Abgasreinigungskomponente, insbesondere stromauf des Partikelfilters 35, eine Zugabevorrichtung 38 für Ammoniak oder für ein zur Abspaltung von Ammoniak befähigtes Reduktionsmittel vorgesehen. Besonders bevorzugt ist eine Zugabevorrichtung 38, welche Harnstoff-Wasserlösung in den Abgastrakt 6 eindüsen kann. Dabei kann zur Verbesserung einer Gleichverteilung ein nicht gesondert dargestellter nachgeschalteter Mischer im Abgastrakt 6 angeordnet sein. Ist, wie dargestellt, ein Oxidationskatalysator 34 dem Partikelfilter vorgeschaltet, so ist die Zugabevorrichtung 38 bevorzugt zwischen dem Oxidationskatalysator 34 und dem Partikelfilter 35 angeordnet.

Stromauf des Partikelfilters 35 bzw. des Oxidationskatalysators 34 und/oder stromab des Partikelfilters 35 bzw. des SCR-Katalysatorbauteils 36 können ein oder mehrere weitere reinigungswirksame Abgasnachbehandlungskomponenten, wie beispielsweise ein weiterer Oxidationskatalysator, ein SCR-Katalysator und/oder ein Stickoxid-Speicher-katalysator im Abgastrakt 6 angeordnet sein. Vorteilhaft ist es beispielsweise, einen so genannten Ammoniak-Sperrkatalysator stromab des SCR-Katalysatorbauteils 36 im Abgastrakt 6 vorzusehen. Die genannten Abgasreinigungskomponenten sind dem Fachmann bekannt, weshalb hier nicht näher darauf eingegangen wird. Nachfolgend wird ohne Beschränkung der Allgemeinheit davon ausgegangen, dass die im Abgastrakt 6 angeordneten Abgasreinigungskomponenten in Abgasströmungsrichtung gesehen einen Oxidationskatalysator 34, einen Partikelfilter 35 mit einer Beschichtung mit einem SCRKatalysatormaterial und ein nachgeschaltetes, als SCR-Katalysator ausgebildetes SCR-Katalysatorbauteil 36 in dieser Reihenfolge umfassen.

Was die Aufladung der Brennkraftmaschine 1 betrifft, so zweigt stromab des zweiten Verdichters 8 ein den Hochdruck-Abgasturbolader 11 umgehender Verdichterbypass 18 ab, in welchem ein Verdichterbypassventil 19 angeordnet ist. Somit kann mittels des zweiten Verdichters 8 komprimierte Frischluft bzw. ein Frischluft-Abgasgemisch, abhängig von einem Betriebszustand der Brennkraftmaschine 1 und einer daraus resultierenden Stellung des Verdichterbypassventils 19 den ersten Verdichter 10 in mehr oder weniger großem Umfang passieren. Auf diese Weise ist ein Ladedruck der Brennkraftmaschine 1 regelbar bzw. bei niedrigen Drehzahlen der Brennkraftmaschine 1, bei welchen der Hochdruck-Abgasturbolader 11 aufgrund eines zu geringen Abgasdrucks noch nicht betreibbar ist, der erste Verdichter 10 über den Verdichterbypass 18 umgehbar.

Im Abgastrakt 6 sind ebenfalls Bypässe 20, 21 angeordnet, welche jeweils eine Turbine 14, 15 umgehen, nämlich ein erster Turbinenbypass 20, in welchem ein erstes Turbinenbypassventil 22 angeordnet ist und ein zweiter Turbinenbypass 21, in welchem ein zweites Turbinenbypassventil 23 angeordnet ist. Bei niedrigen Drehzahlen der Brennkraftmaschine 1 und daraus folgend einem niedrigen Abgasdruck ist der Hochdruck-Abgasturbolader 11 noch nicht betreibbar, daher ist in diesem Betriebszustand das erste Turbinenbypassventil 22 derart ansteuerbar, dass ein Abgasmassenstrom über den ersten Turbinenbypass 20 an der ersten Turbine 14 vorbei leitbar ist und so vollständig zum Antrieb der zweiten Turbine 15 des Niederdruck-Abgasturboladers 9 nutzbar ist.

Bei sehr hohen Drehzahlen der Brennkraftmaschine 1 ist der auf die Turbinen 14, 15 der Abgasturbolader 9, 11 einwirkende Abgasdruck hoch, wodurch diese hohe Drehzahlen erreichen. Daraus folgt eine hohe Verdichterleistung der Verdichter 8, 10 der Abgasturbolader 9, 11 und dadurch ein hoher Ladedruck des Frischluft-Abgasgemisches. Dieser darf jedoch einen vorgegebenen Wert nicht überschreiten, so dass bei Erreichen dieses vorgegebenen Wertes ein oder beide Turbinenbypässe 20, 21 als so genanntes Wastegate nutzbar sind. Dabei sind die Turbinenbypassventile 22, 23 derart ansteuerbar, dass sie beispielsweise teilweise öffnen, wodurch ein Teil des Abgasmassenstroms an den Turbinen 14, 15 vorbei leitbar und dadurch der auf die Turbinen 14, 15 einwirkende und diese antreibende Abgasdruck verringerbar ist. Daraus resultiert eine geringere Kompression des durch die Verdichter 8, 10 der Abgasturbolader 9, 11 verdichteten Gases, d. h. ein geringerer Ladedruck.

Mittels dieser Anordnung des Niederdruck-Abgasturboladers 9 und des Hochdruck-Abgasturboladers 11 ist eine Leistung der Brennkraftmaschine 1 in unterschiedlichen Drehzahlbereichen optimierbar und ein jeweils optimaler Ladedruck bereitstellbar. Dadurch ist insbesondere ein so genanntes Turboloch, d. h. ein fehlender oder geringer Ladedruck und daraus resultierend eine geringe Leistung einer derartigen Brennkraftmaschine 1 in niedrigen Drehzahlbereichen verhinderbar oder dieses Problem zumindest deutlich reduzierbar und damit beispielsweise ein Fahrverhalten und ein Treibstoffverbrauch eines durch diese Brennkraftmaschine 1 angetriebenen Fahrzeugs optimierbar. Für die erfindungsgemäße Brennkraftmaschine 1 ist eine zweistufige Abgasrückführung (AGR), in Form einer Niederdruck-Abgasrückführung und einer Hochdruck-Abgasrückführung vorgesehen.

Zur Realisierung der Niederdruck-Abgasrückführung ist eine Niederdruck-Abgasrückführungs-(AGR)-Leitung 24 vorgesehen, die stromab des Partikelfilters 35 und vor dem SCR-Katalysatorbauteil 36, d. h. auf einer Niederdruckseite des Abgastrakts 6, abzweigt. Stromauf des zweiten Verdichters 8 des Niederdruck-Abgasturboladers 9 und stromab des Luftfilters 7 mündet die Niederdruck-AGR-Leitung 24 in das Luftzufuhrsystem 5 ein. In der Niederdruck-AGR-Leitung 24 ist stromab von der Abzweigung vom Abgastrakt 6 in Strömungsrichtung eines NiederdruckAGR-Massenstroms gesehen ein NiederdruckAGR-Kühler 25 und ein Niederdruck-AGR-Ventil 26 angeordnet. Optional kann die Kühlung des Niederdruck-AGR-Massenstroms unter Entfall des Niederdruck-AGR-Kühlers 25 über die verwendeten Rohrlängen oder Rohrgestaltungen erfolgen. Die Kühlung des Niederdruck-AGR-Massenstroms stellt sicher, dass an den Verdichtern 8, 10 im Abgasrückführungsbetrieb keine unzulässig hohen Temperaturen auftreten. In der dargestellten erfindungsgemäßen Ausführungsform ist weiterhin in der Niederdruck-AGR-Leitung 24 stromauf des Niederdruck-AGR-Kühlers 25 ein SCR-Katalysator 37 vorgesehen. Der zweite SCR-Katalysator 37 ermöglicht eine Verminderung von im rückgeführten Abgas gegebenenfalls vorhandenem Stickoxid und/oder Ammoniak bzw. Sauerstoff. Dadurch werden wiederum Ablagerungen insbesondere auf den Kühlflächen des Niederdruck-AGR-Kühlers 25 und Korrosionserscheinungen generell vermieden oder vermindert und es ist ein verbesserter Ablauf der in den Brennräumen der Brennkraftmaschine 1 erfolgenden Kraftstoffverbrennung ermöglicht. Der SCR-Katalysator 37 kann derart ausgebildet sein, dass er eine Filterfunktion übernehmen kann, so dass zumindest vergleichsweise grobe Partikel aus dem über den Niederdruckpfad rückgeführten Abgas entfernt werden.

Zur Realisierung der Hochdruck-Abgasrückführung ist eine Hochdruck-AGR-Leitung 27 vorgesehen, die stromauf von der Turbine 14 des Hochdruck-Abgasturboladers 11, d. h. auf einer Hochdruckseite des Abgastrakts 6, von einem Abgaskrümmer 33 des Abgastrakts 6 abzweigt. Die Hochdruck-AGR-Leitung 27 mündet stromab der Drosselklappe 13 in das Luftzufuhrsystem 5 ein. Mittels dieser Hochdruck-AGR-Leitung 27 ist ein Hochdruck-AGR-Massenstrom über ein Hochdruck-AGR-Ventil 28 in das Luftzufuhrsystem 5 leitbar. In der dargestellten Ausführungsform ist in der Hochdruck-AGR-Leitung 27 ein Hochdruck-AGR-Kühler 29 angeordnet, welcher gegebenenfalls mit dem Niederdruck-AGR-Kühler 25 baulich und/oder funktionell vereinigt sein kann. Optional kann jedoch eine Kühlung des Hochdruck-AGR-Massenstroms beispielsweise auch über eine Rohrlänge der Hochdruck-AGR-Leitung 27 erfolgen. Für den Niederdruck-AGR-Kühler 25 und/oder den Hochdruck-AGR-Kühler 29 können Umgehungsleitungen, insbesondere mit Einstellmitteln zur variablen Durchsatzeinstellung vorgesehen sein, was nicht gesondert dargestellt ist.

Die dargestellte Brennkraftmaschine 1 weist somit eine Abgasrückführung auf, bei der Abgas stromauf der Turbine 14 des Hochdruck-Abgasturboladers 11 über einen entsprechenden Hochdruckpfad sowie stromab vom Partikelfilter35 über einen entsprechenden Niederdruckpfad dem Abgastrakt 6 entnehmbar ist und, gegebenenfalls nach Abkühlung, stromauf des Verdichters 8 des Niederdruck-Abgasturboladers 9 sowie stromab der Drosselklappe 13 des Luftzufuhrsystems 5 und damit den Brennräumen 3 der Brennkraftmaschine 1 zuführbar ist. Die Brennkraftmaschine 1 ist dabei wahlweise ohne Abgasrückführung, mit Hochdruck-Abgasrückführung oder Niederdruck-Abgasrückführung oder gleichzeitig mit Hochdruck-Abgasrückführung und Niederdruck-Abgasrückführung mit jeweils variablen Abgasrückführmengen betreibbar. Somit ist den Brennräumen 3 der Brennkraftmaschine 1 ein Verbrennungsgas mit einer in weiten Grenzen veränderbaren Abgasrückführrate mit variablem Niederdruckanteil und variablem Hochdruckanteil zuführbar. Eine Einstellung einer Abgasrückführungsmenge, d. h. des rückgeführten Abgasmassenstromes und damit der AGR-Rate, erfolgt mittels der Abgasaufstauklappe 17 und/oder des Niederdruck-AGR-Ventils 26 sowie mittels des Hochdruck-AGR-Ventils 28 als Einstellmitteln, womit der Niederdruckanteil sowie der Hochdruckanteil des insgesamt rückgeführten Abgases ebenfalls in weiten Grenzen einstellbar sind. Dies erzielt insgesamt saubere Abgasrückführungsmassenströme, eine bessere Abkühlung der Abgasrückführungsmassenströme, vermeidet Versottung der Abgasrückführungskühler 25, 29 und ermöglicht eine gute Durchmischung der Abgasrückführungsmassenströme mit Frischluft im Luftzufuhrsystem 5. Es sind hohe Abgasrückführungsraten möglich und es ist ein homogener oder zumindest teilhomogener Betrieb der Brennkraftmaschine 1 möglich.

Die Abgasaufstauklappe 17 und das Niederdruck-AGR-Ventil 26 sind vorliegend Stellglieder einer als Vorsteuerregelung ausgeführten Abgasrückführungsregelung. Sowohl das Niederdruck-AGR-Ventil 26 wie auch die Abgasaufstauklappe 17 sind vorzugsweise kontinuierlich verstellbar. Mit Hilfe der Abgasaufstauklappe 17 und des Niederdruck-AGR-Ventils 26 vor dem Verdichter 8 ist der Niederdruckanteil am gesamten Abgasrückführungsmassenstrom einstellbar und letzterer somit ebenfalls beeinflussbar. Solange ein ausreichendes Druckgefälle zur Förderung des Niederdruck-Abgasrückführungsmassenstroms vorhanden ist, ist dieser zunächst ausschließlich über das Niederdruck-AGR-Ventil 26 einstellbar. Ist dies nicht mehr der Fall, ist zusätzlich die Abgasaufstauklappe 17 etwas anstellbar, um das Druckgefälle über das Niederdruck-AGR-Ventil 26 zu erhöhen. Dabei ist eine sehr gute Durchmischung des Niederdruck-Abbgasrückführungsmassenstroms mit der Frischluft sichergestellt. Ein weiterer Vorteil besteht unter anderem darin, dass das über den Niederdruckpfad rückgeführte Abgas sauber und nahezu pulsationsfrei ist. Zusätzlich steht eine erhöhte Verdichterleistung zur Verfügung, da bei einem hohen Niederdruckanteil rückgeführten Abgases ein vergleichsweise hoher Abgasmassenstrom durch die Turbinen 14, 15 leitbar ist. Da das rückgeführte Abgas nach den Verdichtern 8, 10 durch den leistungsfähigen Ladeluftkühler 12 leitbar ist, kann die Temperatur des Frischluft und Abgas umfassenden Verbrennungsgases auch relativ kalt gehalten werden. Die Brennkraftmaschine 1 ist je nach Bedarf sowohl mit der Hochdruck-Abgasrückführung als auch mit der Niederdruck-Abgasrückführung oder mit beiden betreibbar.

Mittels eines vorzugsweise vorgesehenen, den Ladeluftkühler 12 umgehenden Ladeluftkühlerbypasses 30 im Luftzufuhrsystem 5, ist eine Versottung des Ladeluftkühlers 12 vermeidbar. Die Gefahr einer so genannten Versottung besteht beispielsweise, wenn ein Wasserdampf und gegebenenfalls Partikel enthaltendes Gasgemisch im Ladeluftkühler 12 unter den Taupunkt abgekühlt wird und Kondensatbildung eintritt.

Vorzugsweise ist vorgesehen, dass das gesamte Frischluft-Abgasgemisch oder auch nur ein Teil davon über den Ladeluftkühlerbypass 30, welcher stromauf des Ladeluftkühlers 12 abzweigt, an dem Ladeluftkühler 12 vorbei geleitet werden kann, wodurch es durch den Ladeluftkühler 12 nicht kühlbar ist und daher die Temperatur nicht unter den Taupunkt abfällt. Um sicherzustellen, dass das Frischluft-Abgasgemisch, wenn nötig, d.h. bei hohen Temperaturen des Frischluft-Abgasgemisches, weiterhin mittels des Ladeluftkühlers 12 effektiv kühlbar ist, ist stromab der Verdichter 8, 10 und stromauf des Ladeluftkühlers 12 im Luftzufuhrsystem 5 ein Temperatursensor 31 angeordnet, so dass bei Erreichen einer vorgegebenen Temperatur ein im Ladeluftkühlerbypass 30 angeordnetes Ladeluftkühlerbypassventil 32 entsprechend ansteuerbar ist und daraufhin dieses Ladeluftkühlerbypassventil 32 beispielsweise vollständig öffnet oder vollständig schließt oder in einer weiteren Ausführungsform teilweise öffnet.

Für einen optimalen Betrieb der Brennkraftmaschine 1 sind vorzugsweise weitere Sensoren im Abgastrakt 6 sowie im Luftzufuhrsystem 5 vorgesehen, was der Übersichtlichkeit halber nicht näher dargestellt ist. Insbesondere können Temperatur- und/oder Drucksensoren ausgangsseitig des Abgaskrümmers 33, in den Turbinenbypässen 20, 21, eingangs- und ausgangsseitig oder innerhalb der Abgasreinigungseinheit 16, eingangs- und ausgangsseitig des Luftfilters 7, eingangs- und ausgangsseitig der Verdichter 8, 10, in den Abgasrückführungsleitungen 24, 27 und gegebenenfalls an weiteren Stellen angeordnet sein, um die Temperatur- und Druckverhältnisse zu erfassen. Vorzugsweise ist ferner ein Luftmassenstromsensor stromab des Luftfilters 7 vorgesehen, um den Frischluftmassenstrom zu erfassen. Weiterhin sind vorzugsweise Abgassensoren im Abgastrakt 6, wie beispielsweise eine Lambdasonde im Abgaskrümmer 33 und vor und/oder nach dem Partikelfilter 35 vorgesehen. Ebenso sind bevorzugt ein oder mehrere nicht gesondert dargestellte Stickoxidsensoren, insbesondere unmittlelbar hinter dem Oxidationskatalysator 34 und/oder hinter dem SCR-Katalysatorbauteil 36 vorgesehen. Die Signale der vorhandenen Sensoren sind von einer nicht dargestellten Steuer- und Regeleinrichtung verarbeitbar, welche anhand der Signale und gespeicherten Kennlinien und Kennfelder Betriebszustände der Brennkraftmaschine 1 allgemein, insbesondere im Abgastrakt 6 und im Luftzufuhrsystem 5 ermitteln und durch Ansteuerung von Stellgliedern gesteuert und/oder geregelt einstellen kann. Insbesondere sind Abgasrückführmassenströme im Nieder- und Hochdruckpfad sowie ein Lastzustand der Brennkraftmaschine 1 in Bezug auf Drehmoment bzw. Mitteldruck sowie Drehzahl ermittel- bzw. einstellbar.

Durch die erfindungsgemäße Ausführung ist ein schadstoffarmer und verbrauchsgünstiger Betrieb der Brennkraftmaschine 1 mit hoher Leistungsdichte ermöglicht. Insbesondere ist durch eine Beeinflussung von Niederdruckabgasrückführanteil und Hochdruckabgasrückführanteil ein in Bezug auf Stickoxide über lange Betriebszeiten weitgehend zeitstabiles Reinigungsverhalten ermöglicht. Dabei kommt dem SCR-Katalysator 37 in der Niederdruck-AGR-Leitung 24 eine maßgebliche Rolle zu. Der erfindungsgemäß vorgesehene SCR-Katalysator 37 ermöglicht eine zumindest weitgehende Verminderung des Stickoxid- und Ammoniakanteils im über die NiederdruckAGR-Leitung 24 rückgeführten Abgas. Dies ermöglicht es, eine vergleichsweise hohe, zumindest zeitweise eine in Bezug auf Stickoxide überstöchiometrische Dosierrate von über die Zugabevorrichtung 38 dem Abgas zugeführtem Reduktionsmittel einzustellen. Dadurch ist der Wirkungsgrad von im Abgastrakt 6 vorgesehenen SCR-Abgasreinigungskomponenten verbessert. Durch den Partikelfilter schlüpfende Stickoxide und Ammoniak werden, soweit nicht über die Niederdruck-AGR-Leitung 24 aus dem Abgastrakt 6 abgezogen, vom nachfolgenden SCR-Katalysatorbauteil 36 abgebaut. Restliche, über die Niederdruck-AGR-Leitung 24 abgezogene Stickoxide und Ammoniak werden hingegen im SCR-Katalysator 37 abgebaut und somit eine durch diese Komponenten verursachte Korrosion im Niederdruck-Abgasrückführpfad vermieden. Die Brennkraftmaschine 1 erhält somit zumindest über die Niederdruck-AGR-Leitung 24 ein von Stickoxiden und Ammoniak wenigstens annähernd vollständig gereinigtes Abgas. Infolge der Anordnung des SCR-Katalysators 37 stromauf des Niederdruck-AGR-Kühlers 25 wird dieser frei von Ablagerungen gehalten, welche sich aus im Abgas enthaltenen Stickoxiden bzw. Ammonium-/Harnstoffbestandteilen bilden und die Wärmetauscherleistung herabsetzen können. Speziell wird eine ansonsten häufig zu beobachtende, sehr nachteilige Ablagerung von Ammoniumnitrat im gesamten Niederdruckpfad und speziell im Niederdruck-AGR-Kühler 25 vermieden. Da die Brennkraftmaschine 1 zumindest über den Niederdruckpfad wenigstens annähernd stickoxidfreies Abgas erhält, sind durch Stickoxide verursachte unkontrollierte Zündereignisse in den Brennräumen 13 vermieden und die Verbrennung ist insgesamt stabiler. Insbesondere im Fall eines edelmetallhaltigen SCR-Katalysators 37 ist weiterhin auch eine Oxidation von unverbrannten Kraftstoffbestandteilen (HC, CO) im Niederdruck-Abgasrückführpfad ermöglicht. Auch dies wirkt einer Versottung bzw. Verlackung des Niederdruck-AGR-Kühlers 25 entgegen. Weiterhin bewirkt der SCR-Katalysator 37 eine Strömungsvergleichmäßigung in der Niederdruck-AGR-Leitung 24, Pulsationen sind vermieden oder zumindest verringert und Druckverluste vermindert. Darüberhinaus kann ein ansonsten vorzusehendes (Grob)-Filter in der Niederdruck-AGR-Leitung 24 entfallen, insbesondere wenn der SCR-Katalysator 37 über eine Filterfunktion verfügt.

## Patentansprüche

1. Kraftfahrzeug-Brennkraftmaschine mit einem Luftzufuhrsystem (5) zur Zufuhr von Verbrennungsluft zur Brennkraftmaschine (1) und einem Abgase der Brennkraftmaschine (1) aufnehmenden Abgastrakt (6), in welchem ein Partikelfilter (35) und eine zur selektiven katalytischen Stickoxidreduktion mittels Ammoniak befähigte SCR-Abgasreinigungskomponente angeordnet sind, wobei
- eine Zugabevorrichtung (38) zur Zugabe von Ammoniak oder eines zur Abspaltung von Ammoniak befähigten Reduktionsmittels in den Abgastrakt (6) stromauf der SCR-Abgasreinigungskomponente vorgesehen ist,
- ein insbesondere erster Abgasturbolader (11) vorgesehen ist, dessen Turbine (14) stromauf vom Partikelfilter (35) im Abgastrakt (6) angeordnet ist, und
- zur Rückführung von Abgas aus dem Abgastrakt (6) in das Luftzufuhrsystem (5) eine stromauf der Turbine (14) des insbesondere ersten Abgasturboladers (11) vom Abgastrakt (6) abzweigende erste Abgasrückführleitung (27) und eine stromab vom Partikelfilter (35) vom Abgastrakt (6) abzweigende zweite Abgasrückführleitung (24) vorgesehen sind,
**dadurch gekennzeichnet, dass**
in der zweiten Abgasrückführleitung (24) ein SCR-Katalysator (37) angeordnet ist.

2. Brennkraftmaschine nach Anspruch 1,
**dadurch gekennzeichnet, dass**
die SCR-Abgasreinigungskomponente als katalytische Beschichtung des Partikelfilters (35) und/oder als ein stromauf und/oder stromab des Partikelfilters (35) im Abgastrakt (6) angeordnetes SCR-Katalysatorbauteil (36) ausgebildet ist.

3. Brennkraftmaschine nach Anspruch 1 oder 2,
**dadurch gekennzeichnet, dass**
stromab von der Turbine (14) des insbesondere ersten Abgasturboladers (11) und stromauf des Partikelfilters (35) ein Oxidationskatalysator (34) im Abgastrakt 6 angeordnet ist.

4. Brennkraftmaschine nach Anspruch 3,
**dadurch gekennzeichnet, dass**
die Zugabe von Ammoniak oder des zur Abspaltung von Ammoniak befähigten Reduktionsmittels in den Abgastrakt (6) stromab des Oxidationskatalysators (34) und stromauf des Partikelfilters (36) vorgesehen ist.

5. Brennkraftmaschine nach einem der Ansprüche 1 bis 4,
**dadurch gekennzeichnet, dass**
Einstellmittel zur Einstellung der rückgeführten Abgasmenge vorgesehen sind, welche ein einstellbares Drosselelement (17; 26), angeordnet im Abgastrakt (6) stromab der Abzweigestelle der zweiten Abgasrückführleitung (24) und/oder in der zweiten Abgasrückführleitung (24) vor deren Einmündestelle in das Luftzufuhrsystem (5), und/oder ein einstellbares Drosselelement (28), angeordnet in der ersten Abgasrückführleitung (27) vor deren Einmündestelle in das Luftzufuhrsystem (5), umfassen.

6. Brennkraftmaschine nach einem der Ansprüche 1 bis 5,
**dadurch gekennzeichnet, dass**
ein zweiter Abgasturbolader (9) vorgesehen ist, dessen Turbine (15) stromab von der Turbine (14) des ersten Abgasturboladers (11) im Abgastrakt (6) angeordnet ist.

7. Brennkraftmaschine nach einem der Ansprüche 1 bis 6,
**dadurch gekennzeichnet, dass**
im Luftzufuhrsystem (5) ein umgehbarerer Ladeluftkühler (12) zur Kühlung von verdichteter Verbrennungsluft angeordnet ist.

8. Brennkraftmaschine nach einem der Ansprüche 1 bis 7,
**dadurch gekennzeichnet, dass**
in der ersten Abgasrückführleitung (27) und/oder in der zweiten Abgasrückführleitung (24) ein Abgaskühler (29; 25) zur Kühlung von zum Luftzufuhrsystem (5) rückgeführtem Abgas angeordnet ist.

9. Brennkraftmaschine nach Anspruch 8,
**dadurch gekennzeichnet, dass**
für den in der ersten Abgasrückführleitung (27) und/oder für den in der zweiten Abgasrückführleitung (24) angeordneten Abgaskühler (29; 25) eine Umgehungsleitung vorgesehen ist.

10. Brennkraftmaschine nach einem der Ansprüche 1 bis 9,
**dadurch gekennzeichnet, dass**
der in der zweiten Abgasrückführleitung (24) angeordnete SCR-Katalysator (37) als geträgerter Wabenkörper mit einer SCR-Katalysatormaterialbeschichtung ausgebildet ist.

11. Brennkraftmaschine nach Anspruch 10,
**dadurch gekennzeichnet, dass**
die SCR-Katalysatormaterialbeschichtung auf einer zur Ausfilterung von Partikel geeigneten Partikelfilterstruktur aufgebracht ist.

12. Brennkraftmaschine nach einem der Ansprüche 1 bis 11,
**dadurch gekennzeichnet, dass**
stromauf und/oder stromab des Partikelfilters (35) ein Stickoxid-Speicher-katalysator im Abgastrakt (6) angeordnet ist.

13. Brennkraftmaschine nach einem der Ansprüche 3 bis 12,
**dadurch gekennzeichnet, dass**
stromauf des Oxidationskatalysators (34) und/oder stromab des Partikelfilters (35) ein weiterer Oxidationskatalysator im Abgastrakt (6) angeordnet ist.

## Claims

1. Motor vehicle internal combustion engine with an air supply system (5) for supplying combustion air to the internal combustion engine (1) and an exhaust train (6) receiving exhaust gases of the internal combustion engine (1), in which exhaust train (6) a particulate filter (35) and an SCR exhaust gas purification component designed to carry out selective catalytic nitrogen oxide reduction by means of ammonia are arranged, wherein
- a feed device (38) for feeding ammonia or a reducing agent which can separate ammonia is provided in the exhaust train (6) upstream of the SCR exhaust gas purification component,
- an in particular first exhaust gas turbocharger (11) is provided, of which the turbine (14) is arranged in the exhaust train (6) upstream of the particulate filter (35), and
- for the recirculation of exhaust gas from the exhaust train (6) into the air supply system (5), a first exhaust gas recirculation line (27) branching off from the exhaust train (6) is provided upstream of the turbine (14) of the in particular first exhaust gas turbocharger (11), and a second exhaust gas recirculation line (24) branching off from the exhaust train (6) is provided downstream of the particulate filter (35),
**characterised in that**
an SCR catalyst (37) is arranged in the second exhaust gas recirculation line (24).

2. Internal combustion engine according to claim 1,
**characterised in that**
the SCR exhaust gas purification component is formed as a catalytic coating of the particulate filter (35) and / or as an SCR catalyst component (36) arranged in the exhaust train (6) upstream and / or downstream of the particulate filter (35).

3. Internal combustion engine according to claim 1 or 2,
**characterised in that**
an oxidation catalyst (34) is arranged in the exhaust train (6) downstream of the turbine (14) of the in particular first exhaust gas turbocharger (11) and upstream of the particulate filter (35).

4. Internal combustion engine according to claim 3,
**characterised in that**
the supply of ammonia or the reducing agent which can separate ammonia is provided in the exhaust train (6) downstream of the oxidation catalyst (34) and upstream of the particulate filter (36).

5. Internal combustion engine according to one of the claims 1 to 4,
**characterised in that**
adjusting means for adjusting the amount of exhaust gas recirculated are provided, having an adjustable throttle element (17; 26) arranged in the exhaust train (6) downstream of the branch point of the second exhaust gas recirculation line (24) and / or in the second exhaust gas recirculation line (24) before the opening point thereof into the air supply system (5), and / or an adjustable throttle element (38) arranged in the first exhaust gas recirculation line (27) before the opening point thereof into the air supply system (5).

6. Internal combustion engine according to one of the claims 1 to 5,
**characterised in that**
a second exhaust gas turbocharger (9) is provided, of which the turbine (15) is arranged in the exhaust train (6) downstream of the turbine (14) of the first exhaust gas turbocharger (11).

7. Internal combustion engine according to one of the claims 1 to 6,
**characterised in that**
a bypassable charge air cooler (12) for cooling compressed combustion air is arranged in the air supply system (5).

8. Internal combustion engine according to one of the claims 1 to 7,
**characterised in that**
an exhaust gas cooler (29; 25) for cooling exhaust gas recirculated to the air supply system (5) is arranged in the first exhaust gas recirculation line (27) and / or in the second exhaust gas recirculation line (24).

9. Internal combustion engine according to claim 8,
**characterised in that**
a bypass line is provided for the exhaust gas cooler (29; 25) arranged in the first exhaust gas recirculation line (27) and / or arranged in the second exhaust gas recirculation line (24).

10. Internal combustion engine according to one of the claims 1 to 9,
**characterised in that**
the SCR catalyst (37) arranged in the second exhaust gas recirculation line (24) is formed as a supported honeycomb body with an SCR catalyst material coating.

11. Internal combustion engine according to claim 10,
**characterised in that**
the SCR catalyst material coating is applied to a particulate filter structure suited for filtering out particles.

12. Internal combustion engine according to one of the claims 1 to 11,
**characterised in that**
a nitrogen oxide storage catalyst is arranged in the exhaust train (6) upstream and / or downstream of the particulate filter (35).

13. Internal combustion engine according to one of the claims 3 to 12,
**characterised in that**
a further oxidation catalyst is arranged in the exhaust train (6) upstream of the oxidation catalyst (34) and / or downstream of the particulate filter (35).

## Revendications

1. Moteur à combustion interne pour un véhicule automobile qui comprend un système d'amenée d'air (5) destiné à amener de l'air de combustion au moteur à combustion interne (1) et un conduit de gaz d'échappement (6) qui reçoit les gaz d'échappement du moteur à combustion interne (1), dans lequel sont disposés un filtre à particules (35) et au moyen d'un dispositif d'addition (38), de l'ammoniac ou un agent réducteur approprié pour dégager de l'ammoniac est introduit dans le conduit de gaz d'échappement (6) en amont de l'élément d'épuration des gaz d'échappement SCR (à réduction catalytique sélective), un turbocompresseur sur gaz d'échappement en particulier un premier turbocompresseur sur gaz d'échappement (11) dont la turbine (14) est disposée en amont du filtre à particules (35) est disposé dans le conduit de gaz d'échappement (6), et pour la recirculation des gaz d'échappement à partir du conduit de gaz d'échappement (6) dans le système d'amenée d'air (5), le moteur comporte un première conduite (27) de recirculation des gaz d'échappement, piquée sur le conduit de gaz d'échappement (6) en amont de la turbine (14) du turbocompresseur sur gaz d'échappement (11), en particulier du premier turbocompresseur sur gaz d"échappement, et une seconde conduite (24) de recirculation des gaz d'échappement, piquée sur le conduit de gaz d'échappement (6) en aval du filtre à particules (35), **caractérisé en ce que** dans la seconde conduite (24) de recirculation des gaz d'échappement est disposé un catalyseur (37) SCR.

2. Moteur à combustion interne selon la revendication 1, **caractérisé en ce que** l'élément d'épuration des gaz d'échappement est conçu comme un revêtement catalytique du filtre à particules (35) et/ou comme un composant (36) catalyseur SCR disposé en amont et/ou en aval du filtre à particules (35) dans le conduit de gaz d'échappement (6).

3. Moteur à combustion interne selon la revendication 1 ou la revendication 2, **caractérisé en ce qu'**un convertisseur catalytique à oxydation est disposé en aval de la turbine (14) en particulier du premier compresseur des gaz (11) et en amont du filtre à particules (35) dans le conduit des gaz d'échappement (6).

4. Moteur à combustion interne selon la revendication 3, **caractérisé en ce que** l'addition d'ammoniac ou d'agent réducteur approprié pour dégager de l'ammoniac s'effectue dans le conduit de gaz d'échappement (6) en aval du convertisseur catalytique à oxydation (34) et en amont du filtre à particules (36).

5. Moteur à combustion interne selon l'une quelconque des revendications 1 à 4, **caractérisé en ce que** des moyens de régulation destinés à réguler la quantité de gaz redirigée comprennent un élément d'étranglement (17, 26) réglable, disposé dans le conduit de gaz d'échappement (6) en aval du point de dérivation de la seconde conduite (24) de recirculation de gaz d'échappement et/ou dans la seconde conduite de recirculation de gaz d'échappement (24) avant le point d'embouchure dans le système d'amenée d'air (5), et/ou un élément d'étranglement (28) réglable, disposé dans la première conduite de recirculation (27) de gaz d'échappement avant le point d'embouchure dans le système d'amenée d'air (5).

6. Moteur à combustion interne selon l'une quelconque des revendications 1 à 5, **caractérisé en ce qu'**un second compresseur de gaz d'échappement (9), dont la turbine (15) est disposée en aval de la turbine (14) du premier compresseur de gaz d'échappement (11), est disposé dans le conduit de gaz d'échappement (6).

7. Moteur à combustion interne selon l'une quelconque des revendications 1 à 6, **caractérisé en ce que** dans le système d'amenée d'air (5) est disposé un refroidisseur d'air de suralimentation (12) pouvant être contourné destiné au refroidissement de l'air de combustion comprimé.

8. Moteur à combustion interne selon l'une quelconque des revendications 1 à 7, **caractérisé en ce que** dans la première conduite de recirculation de gaz d'échappement (27) et/ou dans la seconde conduite de recirculation de gaz d'échappement (24) est disposé un refroidisseur de gaz d'échappement (29, 25) destiné à refroidir les gaz d'échappement redirigés vers le système d'amenée d'air (5).

9. Moteur à combustion interne selon la revendication 8, **caractérisé en ce que** pour le refroidisseur de gaz d'échappement (29, 25) disposé dans la première conduite de recirculation de gaz d'échappement (27) et/ou pour le refroidisseur de gaz d'échappement (29, 25) disposé dans la seconde conduite de recirculation de gaz d'échappement (24) est disposée une conduite de dérivation.

10. Moteur à combustion interne selon l'une quelconque des revendications 1 à 9, **caractérisé en ce que** le catalyseur SCR disposé dans la seconde conduite de recirculation de gaz d'échappement (24) est conçu comme un corps en nid d'abeille portant doté d'un revêtement en matériau catalytique SCR.

11. Moteur à combustion interne selon la revendication 10, **caractérisé en ce que** le revêtement en matériau catalytique SCR est appliqué sur une structure de filtre à particules conçue pour filtrer les particules.

12. Moteur à combustion interne selon l'une quelconque des revendications 1 à 11, **caractérisé en ce qu'**en amont et/ou en val du filtre à particules (35) est disposé un catalyseur accumulateur d'oxyde d'azote.

13. Moteur à combustion interne selon l'une quelconque des revendications 3 à 12, **caractérisé en ce qu'**en amont du convertisseur catalytique à oxydation (34) et/ou en aval du filtre à particules (35) est disposé un autre convertisseur catalytique à oxydation dans le conduit de gaz d'échappement (6).
